# EUROPÄISCHE PATENTSCHRIFT

(11) **EP 0 709 441 B1**
(45) Veröffentlichungstag und Bekanntmachung des Hinweises auf die Patenterteilung: **25.11.1998**
(21) Anmeldenummer: 95116532.3
(22) Anmeldetag: 20.10.1995
(51) Int. Cl.: C09D 15/00

(54) **Wässrige dispersionen für Grundierungen**
Aqueous dispersions used for primer
Dispersions aqueuses et leur utilisation pour couche de fond

(30) Priorität: 28.10.1994 DE 4438563
(43) Veröffentlichungstag der Anmeldung: 01.05.1996
(73) Patentinhaber: Clariant GmbH, 65929 Frankfurt am Main (DE)
(72) Erfinder: Désor, Ulrich, D-65510 Idstein (DE); Fichtner, Thomas, D-55278 Dalheim (DE)

(56) Entgegenhaltungen:
- EP-A- 0 192 077
- US-A- 4 822 426

## Beschreibung

Die vorliegende Erfindung betrifft eine wäßrige Dispersion für Grundierungen, deren Herstellung sowie deren Verwendung für Holzanstriche und andere zum Ausbluten neigende Untergründe.

Bekannt ist, daß Holzinhaltsstoffe wie Tannin und Lignin, die beispielsweise in größerer Menge in Hölzern wie Red Cedar, Framire, Merbau und anderen enthalten sind, insbesondere unter Einwirkung von Feuchtigkeit zur Fleckenbildung, insbesondere beim Anstrich solcher Hölzer mit wäßrigen Deckbeschichtungen, führen. Fleckenbildung tritt auch auf beispielsweise bei MDF-Holzfaserplatten (mitteldichte Faserplatte) und Gipskartonplatten, die Tannin-ähnliche Inhaltsstoffe enthalten, die zur Verfärbung von wäßrigen Anstrichen neigen, sowie generell bei mit Teer/Nikotin kontaminierten Flächen. Um diese unerwünschte Erscheinung zu verhindern, werden vor Aufbringen der Deckbeschichtung zunächst Grundierungen aufgebracht. Als Bindemittel für derartige Grundierungen werden bis jetzt mit Erfolg beispielsweise Zweikomponentensysteme auf Basis von Polyurethanen beziehungsweise Epoxidharzen, auf Basis von in Lösemittel gelösten Alkydharzen oder auf Basis von in Lösemitteln gelösten Copolymerisaten verwendet. Nachteile bei diesen Anstrichsystemen sind die relativ lange Durchtrocknungszeit beziehungsweise der Lösemittelgehalt.

Primer für die Oberflächenbeschichtung aus Kunstharzen und in organischen Lösemitteln löslichen metallorganischen Verbindungen sind aus EP-A 0 420 293 bekannt. Die Primer sind aufgrund ihres Lösemittelanteils für die großflächige Anwendung als Grundierung in Innenräumen ungeeignet und werden daher ausschließlich im Klebstoffsektor eingesetzt.

Aus US-A 3 847 857 sind wäßrige Beschichtungen bekannt, die das Fleckigwerden von Holzbeschichtungen verhindern sollen. Diese Beschichtungen basieren auf wasserverdünnbaren Aminogruppen oder quartäre Ammoniumgruppen enthaltenden Vinylpolymerisaten, denen Verbindungen mit mehrwertigen Metallionen, beispielsweise Chrom-, Wolfram-, Bor- und Molybdänionen zugemischt werden können. Nachteilig bei diesen Produkten ist die schlechte Witterungsstabilität und die Toxizität der zugesetzten Metallverbindungen.

Durch Zusatz von Calcium-Barium-Phosphorsilikat-Pigmenten beziehungsweise von Aluminium-Zirkonium-Phosphorsilikat-Pigmenten kann die Wirkung von Grundierungen gegen Holzinhaltsstoffe verbessert werden ("New latex with moisture vapor barrier, alkali resistance and tannin block properties", Dow Chemical Company, Water Borne, Higher Solids Coatings Symposium, 1.-3. Februar 1989, New Orleans, USA sowie "Tannin stain inhibition with Halox Pigments", Broschüre der Fa. Halox Pigments, Hammond, IN, USA). Die erzielten Ergebnisse sind jedoch stark rezepturabhängig.

In EP-A 0 192 077 werden Grundierungen genannt, die auf Basis von wäßrigen gegen mehrwertige Ionen stabilen Dispersionen von Vinylpolymerisaten basieren und einen wasserlöslichen polymeren Zinkamin-Komplex enthalten. Nachteilig bei diesen Grundierungen ist der hohe pH-Wert, der unangenehme Ammoniak-Geruch und die Einschränkung, daß offensichtlich nur Grundierungen formuliert werden können, die für Holz geeignet sind.

Der vorliegenden Erfindung lag daher die Aufgabe zugrunde, eine wäßrige Grundierung bereitzustellen, die beständige und wetterfeste Filme auf verschiedenen Untergründen ergibt und das Ausbluten von Inhaltsstoffen aus dem jeweiligen Untergrund verhindert.

Die Aufgabe konnte gelöst werden durch eine wäßrige Formulierung auf Basis einer Polymerdispersion, der eine wasserlösliche Zirkoniumverbindung zugesetzt wurde.

Gegenstand der vorliegenden Erfindung ist also eine wäßrige Dispersion für Grundierungen, enthaltend ein Emulsionspolymerisat, das gegenüber mehrwertigen Ionen (Zirkoniumionen) stabil ist, und eine wasserlösliche Zirkoniumverbindung.

Als Emulsionspolymerisat kommen erfindungsgemäß alle bekannten Homo- und Copolymerisate in Frage, die in Dispersionsform erhältlich sind und in Gegenwart mehrwertiger Zirkoniumionen hinreichende Stabilität besitzen.

Geeignete Emulsionspolymerisate enthalten vorzugsweise 99,7 bis 70 Gew.-%, bezogen auf die Gesamtmenge der Monomere, radikalisch polymerisierbare olefinisch ungesättigte Verbindungen aus der Gruppe der Acryl- und Methacrylsäureester von (C₁-C₁₂)-Monoalkoholen, vorzugsweise von (C₁-C₈)-Monoalkoho-len, beispielsweise Methanol, Ethanol, iso-Propanol, iso-Butanol, n-Butanol, und 2-Ethylhexylalkohol, der vinylaromatischen Monomere, beispielsweise Styrol und Vinyltoluol, der Vinylester von (C₁-C₁₂)-Alkanmonocarbonsäuren, beispielsweise Vinylacetat, Vinylpropionat, Vinyl-n-butyrat, Vinyllaurat, ®VeoVa 9 und ®VeoVa 10 (Shell Chemie, Vinylester α,α-Dialkyl-verzweigter Monocarbonsäuren), der Vinylhalogenide, beispielsweise Vinylchorid und Vinylidenchlorid, der α,β-mono-olefinisch ungesättigten Nitrile, beispielsweise Acrylnitril und Methacrylnitril, sowie der Alkylester von monoolefinisch ungesättigten Dicarbonsäuren, beispielsweise Malein- und Fumarsäure-di-n-butylester.

Die Polymerisate enthalten vorzugsweise außerdem 0,3 bis 10 Gew.-%, insbesondere 0,5 bis 5 Gew.-%, bezogen auf die Gesamtmenge der Monomere, α,β-monoolefinisch ungesättigte Mono- und/oder Dicarbonsäuren, beispielsweise Acrylsäure, Methacrylsäure, Itaconsäure, Maleinsäure und Fumarsäure, sowie deren gegebenenfalls an den Stickstoffatomen substituierten Amide, beispielsweise Acrylamid, Methacrylamid, N-Methylolacrylamid und N-Butoxymethacrylamid.

Weiterhin können 0 bis 20 Gew.-%, vorzugsweise 0,5 bis 5 Gew.-%, bezogen auf die Gesamtmenge der Monomere, funktionelle Monomere in den Copolymeren enthalten sein, beispielsweise Hydroxylgruppen-haltige Monomere, wie Hydroxyalkylacrylate und -methacrylate, insbesondere Hydroxyethylmethacrylat und Hydroxypropylmethacrylat, und/oder die Naßhaftung verbessernde Acetylacetoxygruppen-haltige Monomere, insbesondere Allylacetoacetat, Acetylacetoxyethylmethacrylat und Acetylacetoxybutylmethacrylat, und/oder vernetzend wirkende Monomere wie Epoxidgruppen-haltige und Silangruppen-haltige Monomere,insbesondere Glycidylacrylat, Glycidylmethacrylat, Vinyltrimethoxysilanund γ-Methacryloxypropyltrimethoxysilan, und/oder Stickstoff-haltige Monomere aus der Gruppe der polymerisierbaren Monomere mit einer Amino-, Ureido- oder N-heterocyclischen Gruppe, beispielsweise Dimethylaminoethylacrylat, und -methacrylat, N-(2-Methacryloylethyl)ethylenharnstoff, und/oder Ketogruppen-haltige Monomere, beispielsweise Diacetonacrylamid, Diacetonmethacrylamid, Acrolein und 2-Butanonmethacrylsäureester.

In selbstvernetzenden Dispersionen können Ketogruppen-haltige Polymerisate noch bis zu 5 Gew.-%, bezogen auf die Gesamtmenge der Monomere, eines di- oder polyfunktionellen Carbonsäurehydrzids, beispielsweise Adipinsäuredihydrazids, enthalten.

Durch dem Fachmann bekannte Kombination von "hart"-machenden Monomeren, beispielsweise Methylmethacrylat und Styrol mit "weich"-machenden Monomeren, beispielsweise Butylacrylat und Ethylhexylacrylat, läßt sich die Mindestfilmbildungstemperatur (MFT) der Dispersion vorzugsweise so einstellen, daß sie im Bereich von 0 bis 50 °C, insbesondere im Bereich von 0 bis 30 °C liegt.

Die Dispersionen weisen üblicherweise einen Feststoffanteil im Bereich von 30 bis 65 Gew.-%, vorzugsweise im Bereich von 40 bis 50 Gew.-%, auf. Der mittlere Teilchendurchmesser der Emulsionspolymerisate beträgt vorzugsweise 0,02 bis 1 µm, insbesondere 0,04 bis 0,8 µm.

Die Dispersionen sollen, bezogen auf den Gehalt an Polymerisat, die üblicherweise verwendeten Mengen von vorzugsweise bis zu 3 Gew.-%, insbesondere bis zu 2 Gew.-%, an ionischen Emulgatoren und/oder vorzugsweise bis zu 6 Gew.-%, insbesondere bis zu 4 Gew.-%, an nicht-ionischen Emulgatoren, jeweils bezogen auf die Dispersion, nicht wesentlich überschreiten.

Als nichtionische Emulgatoren sind beispielsweise Alkylpolyglykolether, wie Ethoxylierungsprodukte von Lauryl-, Oleyl- oder Stearylalkohol oder von Gemischen wie Kokosfettalkohol, Alkylphenolpolyglykolether, vorzugsweise Ethoxylierungsprodukte von Octyl- oder Nonylphenol, Diisopropylphenol, Triisopropylphenol oder von Di- oder Tri-tert.-butylphenol, oder Ethoxylierungsprodukte von Polypropylenoxid, geeignet.

Als ionogene Emulgatoren kommen in erster Linie anionische Emulgatoren in Frage. Es kann sich dabei um die Alkali- oder Ammoniumsalze von Alkyl-, Aryl- oder Alkylarylsulfonaten, -sulfaten,- phosphaten, -phosphonaten oder Verbindungen mit anderen anionischen Endgruppen handeln, die auch Oligo- oder Polyethylenoxid-Einheiten zwischen dem Kohlenwasserstoffrest und der anionischen Gruppe enthalten können. Typische Beispiele sind Natriumlaurylsulfat, Natriumoctylphenolglykolethersulfat, Natriumdodecylbenzolsulfonat, Natriumlauryldiglykolsulfat, Ammonium-tri-tert.-butylphenolpentaglykolsufat oder -oktaglykolsulfat.

Als Schutzkolloide sind gegebenenfalls Naturstoffe, beispielsweise Gummiarabicum, Stärke, Alginate, oder modifizierte Naturstoffe, beispielsweise Methyl-, Ethyl- Hydroxyalkyl- oder Carboxymethylcellulose, oder synthetische Polymere, beispielsweise Polyvinylalkohol, Polyvinylpyrrolidon, oder Gemische aus derartigen Stoffen enthalten. Bevorzugt können modifizierte Cellulose-Derivate und synthetische Schutzkolloide in Mengen von 0,001 bis 1 Gew.-%, bezogen auf die Dispersion enthalten sein. Die Verträglichkeit muß von Fall zu Fall geprüft werden.

Wäßrige gegen mehrwertige Zirkoniumionen stabile Dispersionen sind im Handel erhältlich, beispielsweise ®Mowilith DM 611 (Styrol-/Acrylat Copolymer, Hoechst) und VDM 7410 (Styrol-/Acrylat-Copolymer, Hoechst).

Erfindungsgemäß enhalten die Dispersionen für Grundierungen Zirkoniumverbindungen. Geeignete Zirkonverbindungen sind wasserlösliche Salze oder wasserlösliche Komplexverbindungen des Zirkoniums, beispielsweise Ammoniumzirkoncarbonat, Zirkoniumacetoacetat, Zirkoniumhydroxychlorid, Zirkoniumnitrat, Zirkoniumoxychlorid, Zirkoniumorthosulfat, Zirkoniumacetat, Natriumzirkoniumsulfat, Zirkoniumpropionat, Kaliumzirkoniumphosphat.

Die wasserlöslichen Zirkoniumverbindungen werden bevorzugt in Form einer wäßrigen Lösung eines Ammoniumzirkoncarbonat-Komplexes, besonders bevorzugt in Form einer 20 %igen (gerechnet als Zirkoniumoxid (ZrO₂)) wäßrigen Lösung eines Ammoniumzirkoncarbonat-Komplexes eingesetzt, stabilisiert mit Chelatisierungsreagenzien, beispielsweise Ammoniumtartrat. Derartige wasserlösliche Zirkoniumverbindungen sind im Handel erhältlich, beispielsweise unter dem Namen ®Bacote 20 (MEL Chemicals).

Die erfindungsgemäßen Dispersionen für Grundierungen enthalten vorzugsweise 0,2 bis 20 Gew.-%, insbesondere 0,5 bis 10 Gew.-%, besonders bevorzugt 1 bis 5 Gew.-%, Zirkoniumverbindungen (gerechnet als Zirkoniumoxid (ZrO₂)), bezogen auf die wäßrige Dispersion.

Gegenstand der vorliegenden Erfindung ist auch ein Verfahren zur Herstellung einer wäßrigen Dispersion für Grundierungen.

Dazu wird die wäßrige Dispersion eines Emulsionspolymerisats, das gegen mehrwertige Zirkoniumionen stabil ist, mit einer wasserlöslichen Zirkoniumverbindung vermischt. Die Zirkoniumverbindung kann als Feststoff zugesetzt werden oder vorher in Wasser aufgelöst werden und dann als wäßrige Lösung eindosiert werden. Falls die wäßrige Dispersion nicht ausreichend stabil ist, können zur Erzielung einer verbesserten Stabilität gegen mehrwertige Metallionen zusätzlich 0,1 bis 5 Gew.-%, vorzugsweise 0,5 bis 1 Gew.-%, bezogen auf das Polymerisat, übliche ionische und/oder nicht-ionische Emulgatoren zugesetzt werden.

Die eingesetzten Emulsionspolymerisate werden nach den üblichen Polymerisationsverfahren, beispielsweise Batchverfahren, Dosierverfahren und Zwei- oder Mehrstufenemulsionspolymerisationstechnik hergestellt.

Zum Starten und Weiterführen der Polymerisation bedient man sich öl- und/oder vorzugsweise wasserlöslicher Radikalbildner oder Redoxsysteme. Es eignen sich beispielsweise Wasserstoffperoxid, Kalium- oder Ammoniumperoxidisulfat, Dibenzoylperoxid, Laurylperoxid, Tri-tert.-butylperoxid, Bisazodiisobutyronitril, allein oder zusammen mit reduzierenden Komponenten, beispielsweise Natriumbisulfit, ®Rongalit (Formaldehyd-Natrium-Sulfoxylat, BASF AG), Glucose, Ascorbinsäure und anderen reduzierend wirkenden Verbindungen.

Des weiteren können Regler, beispielsweise Mercaptane, und andere übliche, dem Fachmann für die Emulsionspolymerisation bekannte Hilfsstoffe verwendet werden.

Zusätzlich zu den Zirkoniumverbindungen können die erfindungsgemäßen Grundierungen 0,1 bis 10 Gew.-%, vorzugsweise 0,2 bis 4 Gew.-%, bezogen auf die wäßrige Dispersion, weitere wasserlösliche Metallverbindungen, vorzugsweise Zinkverbindungen, insbesondere die in EP-A 0 192 077 beschriebenen Zinkverbindungen enthalten.

Die erfindungsgemäßen wäßrigen Dispersionen können neben den Zirkoniumverbindungen und den Bindemitteln noch übliche Filmbildehilfsmittel, beispielsweise Glykoletherester oder Benzin, in Mengen bis zu 5 Gew.-% sowie Pigmente und/oder Füllstoffe, beispielsweies Titandioxid, Talkum, Calcit, Dolomit, sowie Verdicker, Dispergier- und Netzmittel, Konservierungsmittel und Entschäumer enthalten. Die Pigmentvolumenkonzentration (PVK) der Grundierung liegt dabei vorzugsweise bei <40 %.

Die erfindungsgemäßen Grundierungen sind lösemittelarm und nicht toxisch und haben eine gute Sperrwirkung gegen fleckenbildende Holzinhaltsstoffe oder Holzinhaltsstoff-ähnliche Verbindungen.

Ein weiterer Gegenstand der vorliegenden Erfindung ist die Verwendung der wäßrigen Dispersion für Grundierungen zur Behandlung von Untergründen, die zum Ausbluten neigen, vorzugsweise von Holz, insbesondere von stark Tanninhaltigen Hölzern vom Typ Red Cedar, Framire und Merbau.

Die in den nachfolgenden Beispielen aufgeführten Teile und Prozente beziehen sich auf das Gewicht, soweit nicht anders vermerkt.

### Beispiel 1:

### Herstellung des Bindemittels

90 bis 99 Teile einer handelsüblichen wäßrigen Copolymerisat-Dispersion, beispielsweise Mowilith DM 611 oder Mowilith VDM 7410, werden mit 0,5 bis 10 Teilen eines Ammoniumzirkoncarbonat-Komplexes (gerechnet als ZrO₂), stabilisiert mit Ammoniumtartrat, gemischt. Hiermit lassen sich bei Raumtemperatur in der Regel ausreichend lagerstabile Mischungen herstellen. Man erhält bei der gewählten Menge des Ammoniumzirkoncarbonat-Komplexes Dispersionen mit nur relativ geringem ammoniakalischen Geruch.

### Beispiel 2:

### Herstellung von Grundierungen:

Zur Herstellung von Grundierungen wird eine modifizierte Dispersion aus Beispiel 1 mit einer Pigmentpaste vermischt.

### Grundierung auf Basis einer Styrol-/Acrylat-Dispersion:

Zunächst wird eine Pigmentpaste hergestellt aus:

| | |
|---|---|
| 181,0 Teilen | Wasser, |
| 2,0 Teilen | Konservierungsmittel |
| | (®Mergal K9N, Riedel de Häen), |
| 2,0 Teilen | Polyacrylsäure-Natriumsalz, 30 %ige wäßrige Lösung |
| | (®Lopon 890, BK-Ladenburg), |
| 1,0 Teil | Natriumpolyphosphonat |
| | (®Lopon WN, BK-Ladenburg), |
| 75,0 Teilen | Titandioxid Rutil |
| | (®Kronos 2059, Kronos Titan), |
| 3,0 Teilen | Polyurethanverdicker |
| | (®Borchigel LW 44, Gebr. Borchers), |
| 3,0 Teilen | Entschäumer |
| | (®Additol VXW 6203, Vianova Kunstharz), |
| 18,0 Teilen | Lösemittel |
| | (®Texanol (aliphatische Ester), Eastman), |
| 150,0 Teilen | Calciumcarbonat (5 µm) |
| | (®Omyacarb 5 GU, Omya). |

Die Einzelkomponenten werden unter.gutem Rühren gemischt und anschließend im Dissolver ca. 15 Minuten dispergiert.

Eine Styrol-/Acrylat-Dispersion wird mit dem Ammoniumzirkoncarbonat-Komplex modifiziert durch Vermischen von:

| | |
|---|---|
| 15,0 Teilen | Ammoniumzirkoncarbonat-Komplex, stabilisiert mit Ammoniumtartrat |
| | (Bacote 20, MEL-Chemicals), |
| 550,0 Teilen | handelsübliche Styrol-/Acrylat-Dispersion |
| | (Mowilith DM 611). |

Die modifizierte Dispersion wird mit der Pigmentpaste innig vermischt. Man erhält 1 kg einer Grundierung.

### Vergleichsbeispiel 2

Es wird eine Grundierung gemäß Beispiel 2 hergestellt mit dem Unterschied, daß keine Zirkoniumverbindung zugesetzt wird.

### Anwendungstechnische Prüfung

### Beispiel 3

Eine Dispersion gemäß Beispiel 1, die bei Raumtemperatur verfilmt, also eine ausreichend niedrige Mindestfilmbildetemperatur hat, wird unverdünnt oder mit ca. 10 % Wasser verdünnt auf Hölzer, beispielsweise Framire oder Red Cedar-Holz, aufgetragen. Nach Trocknung dieser Anstriche (üblicherweise mindestens 4 Stunden Wartezeit) wird mit einem handelsüblichen wäßrigen Dispersionslack überstrichen.

Dispersionen, die den Zusatz des Ammoniumzirkoncarbonat-Komplexes enthalten, weisen eine deutliche Sperrwirkung gegenüber dem Durchschlagen der Inhaltsstoffe auf (Tabelle 1).

### Vergleichsbeispiel 3

Analog Beispiel 3 wird eine Dispersion, jedoch ohne Zusatz von Zirkoniumverbindungen, eingesetzt. Ein Durchschlagen der Inhaltsstoffe aus dem Untergrund kann nicht wirkungsvoll verhindert werden (Tabelle 1).

### Beispiel 4

Eine Grundierung gemäß Beispiel 2 wird eingesetzt für einen einschichtigen Auftrag (ca. 120 g/m²) auf beispielsweise Framire- oder Red Cedar-Holz. Nach mindestens 4 Stunden Trocknung überstreicht man ein- oder zweischichtig mit einem handelsüblichen Dispersionslack, beispielsweise auf Basis von Styrol-Copolymerisat-Dispersionen (PVK ca. 18 %). Nach 24 Stunden Trocknung des Decklacks werden die Hölzer mit der beschichteten Seite nach unten auf mit Wasser getränkte Schwammtücher in eine Wanne gelegt. Eine weitere Prüfmöglichkeit ist, die Hölzer in einem Wasserbad, mit der beschichteten Seite nach unten "schwimmen" zu lassen. Dabei ist wichtig, daß die Randzonen der Hölzer ebenfalls mit der Grundierung und der Dispersionslackfarbe beschichtet werden, um ein Ausbluten vom Rand der Hölzer zu verhindern.

Die Prüfung der Fleckenbildung erfolgt nach Entnahme der Hölzer aus der Wanne beziehungsweise dem Wasserbad nach 24 Stunden Lagerungszeit durch Beurteilung der Verfärbung der Decklackschicht. Ein Durchschlagen von Inhaltsstoffen aus den Hölzern kann wirkungsvoll verhindert werden (Tabelle 1).

### Vergleichsbeispiel 4

Beispiel 4 wird mit einer Grundierung gemäß Vergleichsbeispiel 2 wiederholt. Ein Durchschlagen der Inhaltsstoffe aus den Hölzern kann nicht wirkungsvoll verhindert werden (Tabelle 1).

### Beispiel 5:

Eine Grundierung analog Beispiel 2 wird auf Gipskartonplatten als Untergrund geprüft. Dazu werden ca. 120 g/m² der Grundierung nach Beispiel 2 auf einer handelsüblichen Gipskartonplatte aufgetragen. Nach mindestens 4 Stunden Trocknung der Grundierung wird ein Gipsputz praxisüblicher Schichtdicke appliziert. Nach 24 Stunden Trocknung des Gipsputzes wird qualitativ die Verfärbung beurteilt. Ein Durchschlagen von Inhaltsstoffen aus den Gipskartonplatten kann wirkungsvoll verhindert werden.

### Vergleichsbeispiel 5

Beispiel 5 wird mit einer Grundierung gemäß Vergleichsbeispiel 2 wiederholt. Das Durchschlagen von Inhaltsstoffen aus den Gipskartonplatten kann nicht vollständig verhindert werden (Tabelle 1).

### Beispiel 6:

Ebenfalls geprüft wird eine Grundierung analog Beispiel 2 hinsichtlich der Sperrwirkung gegen Nikotin und Teerbestandteile. Hierzu wird die Grundierung auf eine Polystyrolschaumplatte, die üblicherweise zur Verkleidung von Decken verwendet wird, aufgebracht. Die Platte stammt aus einer Deckenkonstruktion eines Restaurants, in dem stark geraucht wird. Die Deckenplatte ist durch Nikotin beziehungsweise Teerbestandteile braungelb verfärbt. Darauf werden ca. 120 g/m² der Grundierung aufgebracht und nach mindestens 4 Stunden Trocknung mit einer handelsüblichen Dispersionsfarbe überstrichen. Es zeigt sich auch hier eine gute Sperrwirkung gegen die Teerbestandteile (Tabelle 1).

### Vergleichbeispiel 6:

Beispiel 6 wird mit einer Grundierung gemäß Vergleichsbeispiel 2 wiederholt. Das Durchschlagen von Teerbestandteilen kann nicht wirkungsvoll verhindert werden (Tabelle 1).

### Beispiel 7:

Eine Grundierung analog Beispiel 2 wird auf eine Holzspanplatte von Typ V 20 oder V 100 (beispielsweise Fa. Innotec) in einer Menge von ca. 120 g/m² aufgebracht. Nach mindestens 4 Stunden Trocknung wird ebenfalls mit einer handelsüblichen Dispersionsfarbe überstrichen. Nach Trocknung des Deckanstrichs ist die ausreichende Sperrwirkung zu erkennen (Tabelle 1).

### Vergleichbeispiel 7:

Beispiel 7 wird mit einer Grundierung gemäß Vergleichsbeispiel 2 wiederholt. Das Durchschlagen von Inhaltsstoffen aus der Holzspanplatte kann nicht wirkungsvoll verhindert werden (Tabelle 1).

### Vergleichsbeispiel A

Die in den Beispielen 3 bis 7 beschichteten Untergrundmaterialien werden ohne Grundierung direkt mit der in den Beispielen eingesetzten Deckbeschichtung versehen. Ein starkes Durchschlagen von Bestandteilen aus dem Untergrund ist zu beobachten (Tabelle 1).

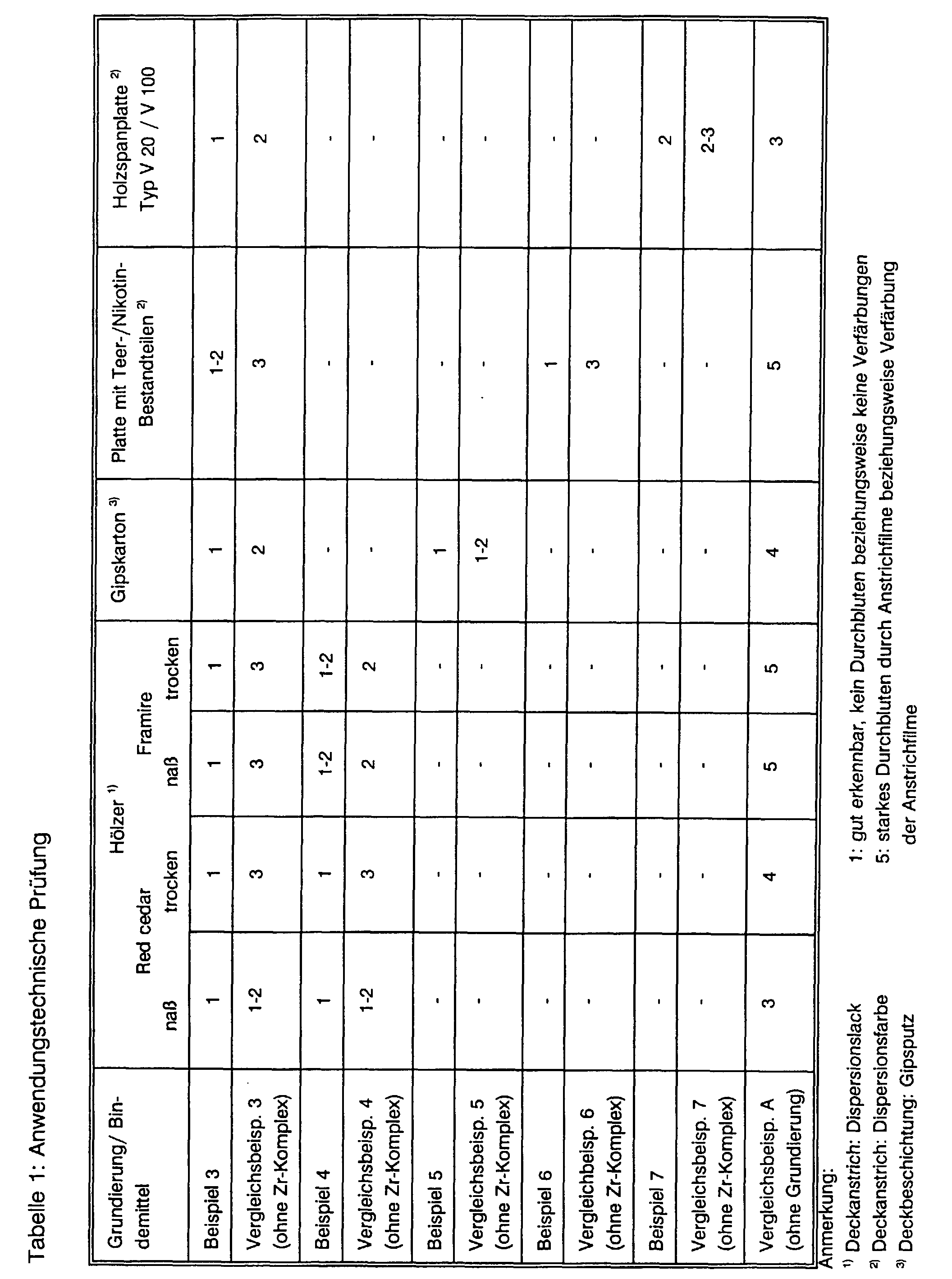

## Patentansprüche

1. Wäßrige Dispersion für Grundierungen, enthaltend ein Emulsionspolymerisat, das gegenüber mehrwertigen Zirkoniumionen stabil ist, und eine wasserlösliche Zirkoniumverbindung.

2. Wäßrige Dispersion für Grundierungen nach Anspruch 1, dadurch gekennzeichnet, daß die Zirkoniumverbindung in einer Menge von 0,2 bis 20 Gew.-% (berechnet als ZrO₂), bezogen auf die Dispersion, vorliegt.

3. Wäßrige Dispersion für Grundierungen nach Anspruch 1, dadurch gekennzeichnet, daß die Zirkoniumverbindung ein Ammoniumzirkoncarbonat-Komplex ist.

4. Wäßrige Dispersion für Grundierungen nach Anspruch 1, dadurch gekennzeichnet, daß zusätzlich zur Zirkoniumverbindung eine Zinkverbindung in einer Menge von 0,1 bis 10 Gew.-%, bezogen auf die Dispersion, enthalten ist.

5. Wäßrige Dispersion für Grundierungen nach Anspruch 1, dadurch gekennzeichnet, daß das Emulsionspolymerisat
| | |
|---|---|
| 99,7 bis 70 Gew.-% | radikalisch polymerisierbare olefinisch ungesättigte Verbindungen aus der Gruppe der Acryl- und Methacrylsäureester von (C₁-C₁₂)-Monoalkoholen, vinylaromatischen Monomeren, Vinylester von (C₁-C₁₂)-Alkanmonocarbonsäuren, Vinylhalogenide, α,β-monoolefinisch ungesättigten Nitrile und Alkylester von monoolefinisch ungesättigen Dicarbonsäuren, |
| 0,3 bis 10 Gew.-% | Verbindungen aus der Gruppe der α,β-monoolefinisch ungesättigten Mono- und Dicarbonsäuren, deren Amide und deren N-substituierte Amide, |
| 0 bis 20 Gew.-% | Verbindungen aus der Gruppe der Hydroxylgruppen-haltige Monomere, Acetylacetoxygruppen-haltige Monomere, Epoxidgruppen-haltige Monomere, Silangruppen-haltige Monomere, Stickstoff-haltige Monomere und Ketogruppen-haltige Monomere |
enthält.

6. Wäßrige Dispersion für Grundierungen nach Anspruch 1, dadurch gekennzeichnet, daß das Emulsionspolymerisat eine Mindestfilmbildungstemperatur von 0 bis 50 °C aufweist.

7. Wäßrige Dispersion für Grundierungen nach Anspruch 1, dadurch gekennzeichnet, daß Zusätze ausgewählt aus der Gruppe der Filmbildehilfsmittel, Pigmente, Füllstoffe, Verdicker, Dispergiermittel, Netzmittel, Konservierungsmittel, Entschäumer enthalten sind.

8. Verfahren zur Herstellung von wäßrigen Dispersionen für Grundierungen nach Anspruch 1 durch Vermischen eines Emulsionspolymerisats, das gegen mehrwertige Zirkoniumionen stabil sind, mit einer wasserlöslichen Zirkoniumverbindung und gegebenenfalls Zusätze ausgewählt aus der Gruppe der Filmbildehilfsmittel, Pigmente, Füllstoffe, Verdicker, Dispergiermittel, Netzmittel, Konservierungsmittel, Entschäumer.

9. Verwendung von wäßrigen Dispersionen für Grundierungen nach Anspruch 1 zur Beschichtung von Untergründen, die zum Ausbluten neigen.

10. Verwendung von wäßrigen Dispersionen für Grundierungen nach Anspruch 1 zur Beschichtung von Holz.

## Claims

1. An aqueous dispersion for primers, comprising an emulsion polymer which is stable with respect to polyvalent zirconium ions, and a water-soluble zirconium compound.

2. An aqueous dispersion as claimed in claim 1, wherein the zirconium compound is present in a quantity of from 0.2 to 20% by weight (calculated as ZrO₂), based on the dispersion.

3. An aqueous dispersion as claimed in claim 1, wherein the zirconium compound is an ammonium zirconium carbonate complex.

4. An aqueous dispersion as claimed in claim 1, which contains in addition to the zirconium compound a zinc compound in a quantity of from 0.1 to 10% by weight, based on the dispersion.

5. An aqueous dispersion as claimed in claim 1, wherein the emulsion polymer comprises
| | |
|---|---|
| from 99.7 to 70% by weight | of free-radically polymerizable, olefinically unsaturated compounds from the group consisting of the acrylates and methacrylates of C₁-C₁₂ monoalcohols, aromatic vinyl monomers, vinyl esters of C₁-C₁₂ alkanemonocarboxylic acids, vinyl halides, α,β-monoolefinically unsaturated nitriles and alkyl esters of monoolefinically unsaturated dicarboxylic acids, |
| | |
| from 0.3 to 10% by weight | of compounds selected from the group consisting of α,β-monoolefinically unsaturated mono- and/or dicarboxylic acids, amides thereof and N-substituted amides thereof, |
| | |
| from 0 to 20% by weight | of compounds from the group consisting of hydroxyl-containing monomers, acetylacetoxy-containing monomers, epoxide-containing monomers, monomers containing silane groups, nitrogen-containing monomers and keto-containing monomers. |

6. An aqueous dispersion as claimed in claim 1, wherein the emulsion polymer has a minimum film-forming temperature of from 0 to 50°C.

7. An aqueous dispersion as claimed in claim 1, which contains additives selected from the group consisting of film-forming auxiliaries, pigments, fillers, thickeners, dispersants, wetting agents, preservatives and defoamers.

8. A process for the preparation of an aqueous dispersion as claimed in claim 1, by mixing an emulsion polymer which is stable with respect to polyvalent zirconium ions with a water-soluble zirconium compound and, if desired, additives selected from the group consisting of film-forming auxiliaries, pigments, fillers, thickeners, dispersants, wetting agents, preservatives and defoamers.

9. The use of an aqueous dispersion as claimed in claim 1 for the coating of substrates which show a tendency to bleeding.

10. The use of an aqueous dispersion as claimed in claim 1 for the coating of wood.

## Revendications

1. Dispersion aqueuse pour préparer des couches de fond, contenant un polymère en émulsion, lequel est stable contre les ions zirconium multivalents et un composé de zirconium hydrosoluble.

2. Dispersion aqueuse pour préparer des couches de fond selon la revendication 1, caractérisée en ce que le composé de zirconium est présent dans une quantité de 0,2 à 20 % en poids (calculée sur la base de ZrO₂), par rapport à la dispersion.

3. Dispersion aqueuse pour préparer des couches de fond selon la revendication 1, caractérisée en ce que le composé de zirconium est un complexe de carbonate de zirconium et d'ammonium.

4. Dispersion aqueuse pour préparer des couches de fond selon la revendication 1, caractérisée en ce qu'elle contient, en plus du composé de zirconium, un composé de zinc dans une quantité de 0,1 à 10 % en poids par rapport à la dispersion.

5. Dispersion aqueuse pour préparer des couches de fond selon la revendication 1, caractérisée en ce que le polymère en émulsion contient
de 99,7 à 70 % en poids de composés à insaturation oléfinique polymérisables par voie radicalaire pris parmi les esters d'acide acrylique et d'acide méthacrylique avec des monoalcools en C₁-C₁₂, les monomères vinylaromatiques, les esters vinyliques d'acides (alcane en C₁-C₁₂)monocarboxyliques, les halogénures de vinyle, les nitriles à insaturation monooléfinique en α,β et les esters d'alkyles d'acides dicarboxyliques à insaturation monooléfinique,
de 0,3 à 10 % en poids de composés pris parmi les acides mono- et dicarboxyliques à insaturation monooléfinique en *α,β* leurs amides et leurs amides N-substitués,
de 0 à 20 % en poids de composés pris parmi les monomères contenant des groupes hydroxyle, les monomères contenant des groupes acétylacétoxy, les monomères contenant des groupes époxyde, les monomères contenant des groupes silane, les monomères contenant de l'azote et les monomères contenant des groupes céto.

6. Dispersion aqueuse pour préparer des couches de fond selon la revendication 1, caractérisée en ce qu'elle présente un polymère en émulsion ayant une températurede point blanc de 0 à 50 °C.

7. Dispersion aqueuse pour préparer des couches de fond selon la revendication 1, caractérisée en ce qu'elle contient des matières d'addition prises parmi les adjuvants filmogènes, les pigments, les charges, les épaississants, les agents dispersants, les agents mouillants, les agents de conservation, les agents anti-mousse.

8. Procédé pour la préparation de dispersions aqueuses pour préparer des couches de fond selon la revendication 1, par mélange d'un polymère en émulsion lequel est stable aux ions zirconium multivalents, avec un composé de zirconium hydrosoluble et éventuellement des additifs pris parmi les adjuvants filmogènes, les pigments, les charges, les épaississants, les agents dispersants, les agents mouillants, les agents de conservation, les agents anti-mousse.

9. Utilisation de dispersions aqueuses pour préparer des couches de fond selon la revendication 1, pour enduire des subjectiles qui présentent une tendance au dégorgement.

10. Utilisation de dispersions aqueuses pour préparer des couches de fond selon la revendication 1, pour enduire le bois.
